# EUROPEAN PATENT APPLICATION

(11) **EP 0 739 808 A1**
(43) Date of publication of application: **30.10.1996**
(21) Application number: 96105869.0
(22) Date of filing: 15.04.1996
(51) Int. Cl.: B62D 43/04

(54) **An automobile spare wheel holder**

(30) Priority: 28.04.1995 IT TO950103 U
(71) Applicant: FIAT AUTO S.p.A., 10121 Torino (IT)
(72) Inventor: Richiardi, Silvio, 10128 Torino TO (IT)
(74) Representative: Di Francesco, Gianni

(57) **Abstract**

An automobile spare wheel holder, of the type located in a rear position underneath the vehicle floor, consists of a guide (1a) formed by two L-shaped tubular elements and/or metal wires having the end portions of their long sides connected by a transversal segment (1c) provided with a means for connecting to a hooking device (9) carried by the vehicle floor. The ends of the short sides are rotatably mounted to the floor of the vehicle body (3). The holder further comprises a housing (5) for the spare wheel (6). The housing (5) is adapted to come out of the guide (1a) by sliding blocks (7) which slide on the guide (1a) upon releasing it from the device (9) for hooking to the vehicle floor.

## Description

The present invention refers to an automobile spare wheel holder, in particular of the kind located in a rear position underneath the vehicle floor.

It is known to position the spare wheel on the outside of the vehicle, underneath the vehicle floor, by means of a support made of tubular elements or metal wires. Such a support is pivotally mounted on one side and has a hooking device on the other side for supporting the wheel and keeping it in contact with the floor.

The main drawback of such a system lies in that the wheel gets inevitably dirty due to the grit on the roads on which the vehicle travels.

A second but not less important problem concerns the fact that the operation of taking the spare wheel out of its support is not simple. Once the support has been opened, the spare wheel usually covered in mud has to be extracted from underneath the vehicle with considerable effort. Particularly, it is difficult to fit the wheel back into its support.

It is an object of the present invention to obviate the above cited inconveniences.

The above and further objects which will be more apparent hereinafter are attained according to the present invention by the provision of an automobile spare wheel holder, in particular of the type located in a rear position underneath the vehicle floor, consisting of a guide formed by two L-shaped tubular elements and/or metal wires having the end portions of their long sides connected by a transversal segment provided with a means for connecting to a hooking device carried by said vehicle floor, the end portions of the short sides being rotatably mounted to the floor of the vehicle body, and further comprising a housing for the spare wheel, characterised in that said housing is adapted to come out of the guide by means of sliding blocks which slide on said guide upon releasing said guide from said device for hooking to the vehicle floor.

For a better understanding of the present invention, reference is made to the following detailed description of an exemplary embodiment considered in combination with the accompanying drawings in which:

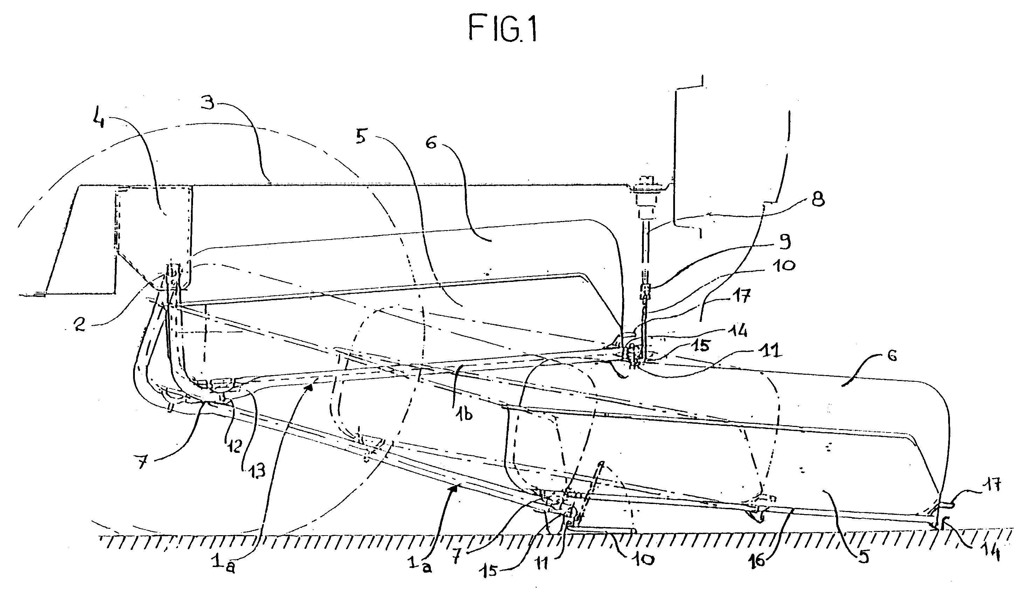

- FIG. 1 is: a side view of an automobile spare wheel holder in accordance with the present invention, illustrated in it its closed arrangement in full line and in its open position in dashed line;
- FIG. 2 is: a plan view of the spare wheel holder of FIG. 1;
- FIG. 3 is: a front view of a particular embodiment of a component of the spare wheel holder of FIG. 1; and
- FIGS. 4 to 7: show details of FIGS. 1 to 3 to an enlarged scale.

With reference to the drawings, numeral 1 designates an automobile spare wheel holder located underneath the floor in the rear part of the vehicle.

Said spare wheel holder is composed of a guide 1a formed by two L-shaped tubular elements and/or metal wires 1b, the long sides of which are connected in their end portions by a segment 1c. In the illustrated embodiment, the guide is obtained by bending a single piece of tube.

The free ends of the short sides of tubular elements and/or metal wires 1b are rotatably connected through hinges 2 directly to the vehicle floor 3 of the vehicle body or, in this example, through brackets 4.

Mounted on guide 1a is a housing 5 for the spare wheel 6. Housing 5 is made of plastic, but can also be of metal and have sliding blocks 7 fitted on its bottom in the innermost part with respect to the vehicle to enable the housing to slide an oscillate relative to said guide 1a.

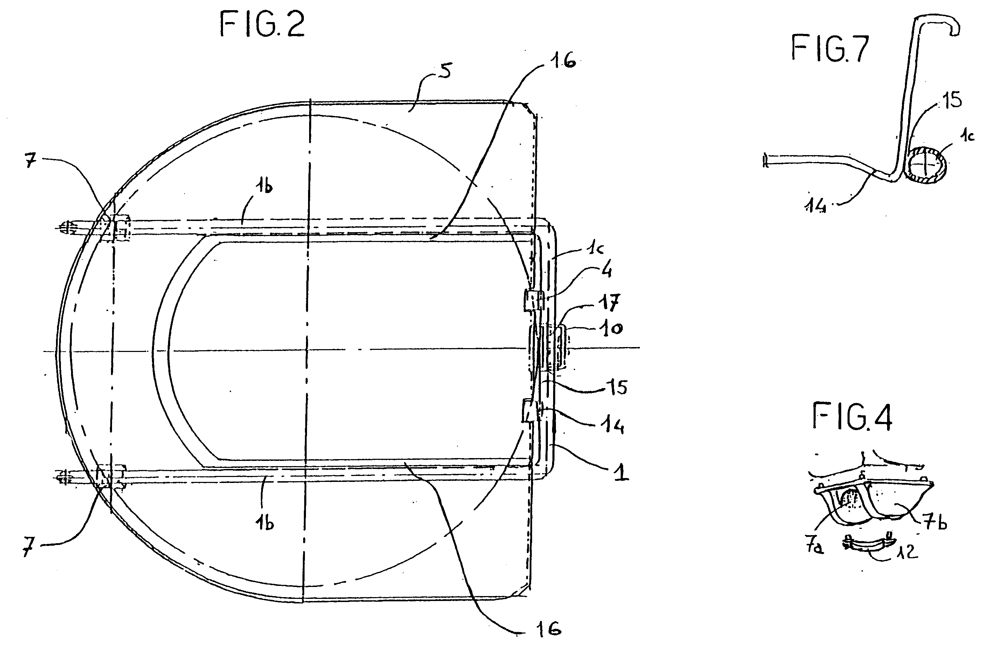

Sliding blocks 7, which can be integral with the container or mounted thereto on the innermost side (with respect to the vehicle), have a curved longitudinal profile (FIG. 4) with a recess 7a to facilitate upward oscillating movement of the housing with respect to the guide 1a. The sliding blocks 7 have reduced side shoulders 7b which allow considerable play to let the housing slide freely, either in pulling or pushing, should also mud be present.

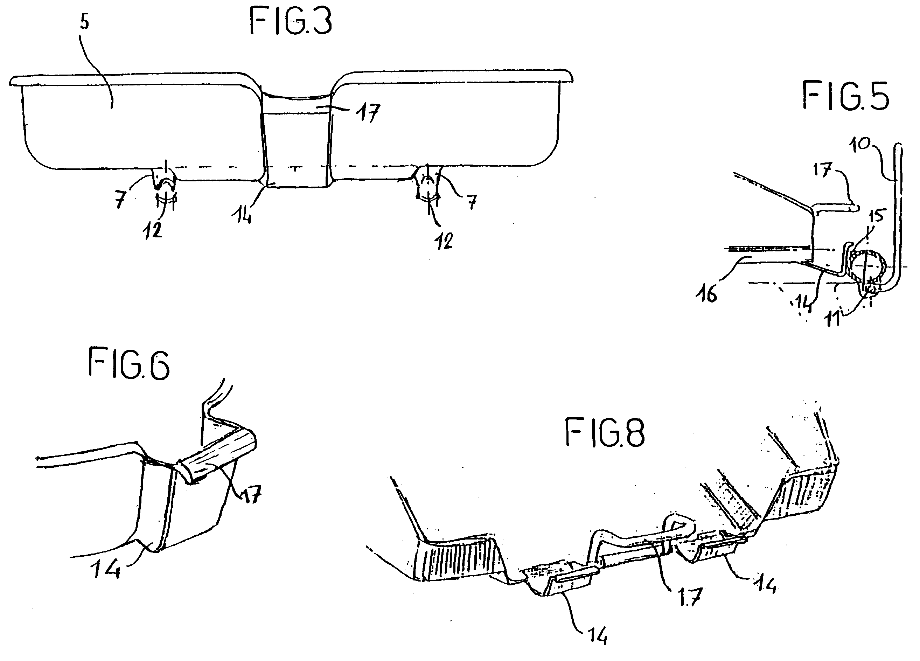

In the closed arrangement during ride of the vehicle guide 1a is retained by a known device operated from the inside of the vehicle and constituted by a threaded shaft 8 provided with a hook 9. Said hook 9 can be hooked to segment 1c of the guide, directly or by means of an extension piece 10 (FIG. 5) hinged to said segment 1c on pins 11.

The sliding blocks 7 may be closed inferiorly by a plate 12 in order to prevent the housing 5 from coming off the guide 1a completely.

With the spare wheel holder in a closed arrangement, the sliding blocks 7 are at a concave profile length 13, obtained by bending the tubular elements and/or wires 1b and meant to be horizontal when the guide 1a rests on the ground. In this way, a sharp fall of the housing is prevented when the same is lifted from the rear to disengage one or more stopping means 14 (FIGS. 6 and 8) obtained therein from one or more abutments 15 on segment 1c.

The housing 5 is transversely locked in the closed arrangement for ride of the vehicle, by further guides 16 obtained integral with the bottom of the housing or attached thereto.

The use of housing 5 is made easy by a handle 17 that can be moulded from the same plastic or metal (FIG. 6) or obtained by fixing a metal insert (FIG. 8).

Use of the spare wheel holder of the present invention is described herein after.

When it is desired to take the spare wheel out, guide 1a is lowered to the ground rotating on hinges 2 on releasing front hook 9. The front portion of guide 1a rests on the ground. Container 5 is then lifted by means of handle 17 and pivoted on sliding blocks 7 relative to guide 1a upon releasing the stopping means 14 from abutments 15.

Then, the housing 5 is forced backwards. Blocks 7 slide on the tubular elements and or wires of guide 1a for the whole length until the housing substantially comes out of the profile of the vehicle so that the spare wheel 6 can be grabbed easily.

To put the wheel back or fit the wheel being replaced, the operations are reverted. The housing 5 is forced to slide inwardly (towards the front) until the sliding blocks 7 reach recesses 13 and the stopping means 14 engage abutments 15 again. At this point, it is enough to lift the guide to engage it with hook 9 again in the normal riding arrangement.

## Claims

1. An automobile spare wheel holder, in particular of the type located in a rear position underneath the vehicle floor, consisting of a guide (1a) formed by two L-shaped tubular elements and/or metal wires having the end portions of their long sides connected by a transversal segment (1c) provided with a means for connecting to a hooking device (9) carried by said vehicle floor, the end portions of the short sides being rotatably mounted to the floor of the vehicle body (3), and further comprising a housing (5) for the spare wheel (6), characterised in that said housing (5) is adapted to come out of the guide (1a) by means of sliding blocks (7) which slide on said guide (1a) upon releasing said guide (1a) from said device (9) for hooking to the vehicle floor.

2. A spare wheel holder as set forth in claim 1, characterised in that the sliding blocks (7) are obtained integral with the bottom of the housing (5), at the innermost end thereof with respect to the vehicle.

3. A spare wheel holder as set forth in claim 1, characterised in that the sliding blocks (7) are attached to the bottom of the housing (5).

4. A spare wheel holder as set forth in claim 1, characterised in that the sliding blocks (7) are provided with a recess (7a) and side shoulders (7b) reduced so as to provide play with respect to said tubular elements and/or wires (1b) of the guide (1a).

5. A spare wheel holder as set forth in claim 1, characterised in that when the guide (1a) is closed by means of said hooking device (9) the sliding blocks (7) are positioned in curved profile lengths (13) obtained in said tubular elements and/or wires (1b) of the guide (1a).

6. A spare wheel holder as set forth in claim 1, characterised in that the housing (5) is fitted with a handle (17) obtained integral therewith.

7. A spare wheel holder as set forth in claim 1, characterised in that the housing (5) is fitted with a handle (17) obtained by attaching a metal insert.

8. A spare wheel holder as set forth in claim 1, characterised in that the housing (5) is fitted with stopping means (14) adapted for cooperation with abutments (15) obtained on said segment (1c) to prevent the guide (1a) from coming out accidentally.
